# EUROPÄISCHE PATENTSCHRIFT

(11) **EP 4 453 283 B1**
(45) Veröffentlichungstag und Bekanntmachung des Hinweises auf die Patenterteilung: **31.12.2025**
(21) Anmeldenummer: 23700431.2
(22) Anmeldetag: 05.01.2023
(51) Int. Cl.: C25B 1/04, C25B 9/19, C25B 15/023, C25B 15/031, C25B 15/033, C25B 15/08

(54) **VERFAHREN ZUM BETRIEB EINER ELEKTROLYSEANLAGE**
METHOD FOR OPERATING AN ELECTROLYSIS PLANT
PROCÉDÉ POUR FAIRE FONCTIONNER UNE INSTALLATION D'ÉLECTROLYSE

(30) Priorität: 15.03.2022 DE 102022202552
(43) Veröffentlichungstag der Anmeldung: 30.10.2024
(73) Patentinhaber: Siemens Energy Global GmbH & Co. KG, 81739 München (DE)
(72) Erfinder: HANEBUTH, Marc, 90482 Nürnberg (DE); ROGLER, Mirjam, 91056 Erlangen (DE); WAGNER, Richard, 91090 Effeltrich (DE)
(86) Internationale Anmeldenummer: PCT/EP2023/050139
(87) Internationale Veröffentlichungsnummer: WO 2023/174586

(56) Entgegenhaltungen:
- WO-A1-2016/116211
- MAROCCO PAOLO ET AL: "Online measurements of fluoride ions in proton exchange membrane water electrolysis through ion chromatography", JOURNAL OF POWER SOURCES, vol. 483, 21 November 2020 (2020-11-21), AMSTERDAM, NL, pages 229179, XP093090002, ISSN: 0378-7753, DOI: 10.1016/j.jpowsour.2020.229179

## Beschreibung

Die Erfindung betrifft ein Verfahren zum Betrieb einer Elektrolyseanlage umfassend einen Elektrolyseur zur Erzeugung von Wasserstoff und Sauerstoff als Produktgase.

Wasserstoff wird heutzutage beispielsweise mittels Proton Exchange Membrane (PEM)-Elektrolyse oder alkalischer Elektrolyse erzeugt. Die Elektrolyseure produzieren mit Hilfe elektrischer Energie Wasserstoff und Sauerstoff aus dem zugeführten Wasser.

Ein Elektrolyseur weist dabei in der Regel eine Vielzahl von Elektrolysezellen auf, welche benachbart zueinander angeordnet sind. Mittels der Wasserelektrolyse wird in den Elektrolysezellen Wasser in Wasserstoff und Sauerstoff zerlegt. Bei einem PEM-Elektrolyseur beispielsweise wird typischerweise anodenseitig VE-Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Das Wasser wird dabei in der Regel von einer Unterseite in den Anodenraum und/oder Kathodenraum gefördert.

Neben der PEM-Elektrolyse sind auch andere Formen von Elektrolysen bekannt, wie etwa die alkalische Elektrolyse, bei denen andere Ionen durch eine Membran transportiert werden.

Der Einfachheit halber wird im Rahmen der vorliegenden Erfindung daher exemplarisch von Protonen gesprochen, zum Beispiel mit dem Begriff "protonendurchlässig". Es gibt in der derzeitigen Forschung weitere Typen von Elektrolyseuren, bei denen andere Ionen, z. B. Hydroxidionen, selektiv durch die Membran treten und so einen Ladungstransport für die Elektrolysereaktion ermöglichen. Die allgemeine Problemstellung, die der Erfindung zugrunde liegt, lässt sich ebenso auf diese Art von Elektrolyseuren anwenden. Somit sind die hier genannten Protonen stellvertretend zu verstehen. Der Begriff "protonendurchlässig" ist also in einem deutlich weiter gefassten Sinn zu verstehen, und zwar im Sinne von "durchlässig für eine bestimmte Art von Ionen", insbesondere durch eine Membran. Die vorliegende Erfindung betrifft allerdings ausschließlich Verfahren, bei denen die Membran "protonendurchlässig" im auf dem technischen Gebiet üblichen Sinn ist, d.h. bei denen Protonen die protonendurchlässige Membran passieren.

Der Elektrolyseprozess findet in dem so genannten Elektrolysestack, zusammengesetzt aus mehreren Elektrolysezellen, statt. In dem unter DC-Spannung stehenden Elektrolysestack wird als Edukt Wasser eingebracht, wobei nach dem Durchlauf durch die Elektrolysezellen zwei Fluidströme, bestehend aus Wasser und Gasblasen (Sauerstoff O₂ bzw. Wasserstoff H₂) austreten. Die jeweilige Trennung der Wasser- und Gasphase in den Fluidströmen erfolgt in Gasabscheidern oder Gas-Separatoren.

Wasserstoff stellt einen umweltfreundlichen und nachhaltigen Energieträger dar. Er hat das einzigartige Potential Energiesysteme, Verkehr und große Teile der Chemie klimafreundlich und ohne CO₂-Emissionen zu realisieren. Dieses Ziel kann erreicht werden, wenn der Wasserstoff mit Hilfe von erneuerbaren Energien per PEM-Elektrolyse hergestellt wird.

Wegen der harschen elektrochemischen Bedingungen, die bei einer Elektrolyse stets auftreten können, können sich innerhalb des Elektrolseurs, beispielsweise im Bereich der Zellen in geringem Maße H₂O₂ bzw. OH-Radikale. Es ist allgemein bekannt, dass solche Spezies das Membranmaterial von PEM-Elektrolyseuren chemisch angreifen können, wobei bei einem solchen Abbau Fluoride als Degradationsprodukte freigesetzt werden. Dies liegt daran, dass die Membran einen Fluoranteil aufweist und beispielsweise aus PFSA "Perfluorosulfic acid" besteht. Die Membran ist ein besonders wichtiges Element für die Funktionsfähigkeit der Elektrolysezellen in der PEM-Elektrolyse, so dass deren Lebensdauer und deren Limitierung durch Degradationseffekte insbesondere auch unter wirtschaftlichen Gesichtspunkten große Beachtung finden.

Im Rahmen der kontinuierlichen Weiterentwicklung und Optimierung von PEM-Elektrolyseuren sollen die Membranen so dünn wie möglich ausgeführt werden. Es resultiert dadurch ein geringerer Spannungsabfall während der Elektrolyse, was gleichzeitig zu einer höheren Effizienz führt. Im Rahmen dieser Optimierung kann man allerdings in ein Betriebsregime gelangen, in dem die Lebensdauer der Elektrolysezellen von der Fluorid-Freisetzungsrate (FFR) abhängt und den wesentlichen limitierenden Faktor bildet. Beispielsweise lässt sich ein Lebensende festlegen, wenn 10 % des ursprünglich in der Membran vorhandenen Fluorids abgebaut wurde. Daher ist es ein besonderes Bedürfnis die über den Betrieb der Elektrolyseanlage aus der Membran freigesetzte Fluoridmenge zu bestimmen, um insbesondere in dem Betriebsregime zuverlässige Lebensdauerprognosen ermitteln zu können. Zuverlässige und zugleich auch unter betriebwirtschaftlichen Gesichtspunkten einfache Lösungen sind bisher nicht bekannt.

Die Fluoridkonzentration kann zwar mit "ex-situ"-Analysen bestimmt werden, wobei allerdings die Probenahme nur mit signifikantem Aufwand automatisierbar ist. Grundsätzlich kann zum Beispiel Ionenchromatographie eingesetzt werden, wobei diese Geräte kostenintensiv sind, ihr Einsatz in kommerziellen Elektrolysesystemen also oft keine Option darstellen.

Das Fluorid ist, ähnlich wie die Protonen, hier nur stellvertretend als Degradationsindikator zu verstehen. Es gibt in der derzeitigen Forschung beispielsweise auch Polymermembranen, die kein Fluor enthalten. Diese sind in aller Regel jedoch auch für einen selektiven Ladungstransport funktionalisiert, zum Beispiel mit Sulfonsäuregruppen oder Aminogruppen. Die vorliegende Erfindung ließe sich auf solche Elektrolyseurtypen übertragen und entsprechend anpassen, so dass das Fluoridstellvertretend für Substanzen stehen könnte, welche als Degradationsindikator der Membran jeweils herangezogen und entsprechend detektiert werden können. Die vorliegende Erfindung betrifft allerdings ausschließlich Verfahren, bei denen freigesetztes Fluorid als Degradationsindikator der Membran herangezogen wird. Die Membran enthält also Fluor, das Membranmaterial weist dann beispielsweise PFSA - "Perfluorosulfonic acid" auf. Die Verwendung anderer Abbauprodukte der Membran als Degradationsindikator ist hingegen nicht Gegenstand der vorliegenden Erfindung.

In Marocco et al., Journal of Power Sources (2020) 483, 229179 und WO 2016/116211 sind Verfahren zur Ermittlung einer betriebsbedingten Membrandagradation offenbart.

Der Erfindung liegt daher die Aufgabe zugrunde ein Verfahren anzugeben, mit dem in einer Elektrolyseanlage die Lebensdauer der Membran zuverlässig bestimmbar ist. Der Erfindung liegt als weitere Aufgabe zugrunde eine Elektrolyseanlage anzugeben, die hinsichtlich Anlageneffizienz und Sicherheit einen verbesserten Betrieb ermöglicht.

Die auf ein Verfahren gerichtete Aufgabe wird erfindungsgemäß gelöst durch ein Verfahren zum Betrieb einer Elektrolyseanlage umfassend einen Elektrolyseur zur Erzeugung von Wasserstoff und Sauerstoff als Produktgase, wobei Wasser als Edukt zugeführt wird und an einer protonendurchlässigen Membran zu Wasserstoff und Sauerstoff gespalten wird, wobei ein Produktgasstrom in einem Phasengemisch umfassend Wasser sowie ein jeweiliges Produktgas gebildet wird, und wobei ein Produktgasstrom einem dem Elektrolyseur nachgeschalteten Gas-Separator zugeführt wird, wobei die Fluoridfreisetzung der Membran über die Betriebszeit bestimmt wird, wobei der zeitliche Verlauf der Fluoridkonzentration als integrierte Fluoridfreisetzungsrate ermittelt wird und der zeitliche Verlauf des Füllstands im Gas-Separator bilanziert wird, wobei ein Maß für die betriebsbedingte Degradation der protonendurchlässigen Membran infolge einer Freisetzung von Fluorid ermittelt wird.

Die Erfindung geht hierbei bereits von der Erkenntnis aus, dass die Fluorid-Freisetzungsrate der Membran prinzipiell eine gut geeignete Messgröße und zuverlässiger Indikator ist, um die Degradation der Membran zu überwachen. Dies beruht darauf, dass das vornehmliche Abbauprodukt der Membran verdünnte Flusssäure HF ist. Schwierigkeiten, dass sich die Fluoridkonzentration direkt mit einfachen Mitteln und hinreichend zuverlässig bestimmen lässt, insbesondere in einer komplexen Elektrolyseanlage im laufenden Betrieb, können durch eine "in-situ" Messung über die Betriebszeit überwunden werden. Als absoluter oder relativer Wert der Degradation wird die integrierte Fluorfreisetzungsrate über die Zeit ermittelt. Hierzu wird vorteilhaft der zeitliche Verlauf der Fluoridkonzentration im Betrieb der Elektrolyseanlage ermittelt. Durch das Konzept einer "in-situ" Messung stehen für die Bestimmung des zeitlichen Verlaufs der Fluoridfreisetzungsrate auf einfache Weise Informationen über die betriebsbedingt vorhandenen Stoffströme bzw. Volumenströme zur Verfügung, wie der zugeführte Eduktstrom an Wasser, sowie die Produktströme in dem Phasengemisch aus Wasser und Produktgas. Im Gas-Separator stellt sich somit eine Phasentrennung ein, so dass die flüssige Phase, d.h. Wasser, zu einem sich ändernden Füllstand im Gas-Separator führt, der bilanziert und ausgewertet werden kann. Parallel dazu wird die Fluoridfreisetzung, d.h. deren Konzentration in den Stoffströmen, im zeitlichen Verlauf mit geeigneter Sensorik zur Konzentrationsmessung aufgezeichnet.

Die Erfindung schafft mithin ein sehr einfaches und robustes Verfahren, um auf die Fluorid-Konzentrationen in einer Elektrolyseanlage zu schließen und damit auf die Degradation der Membran und deren betriebliche Restlebensdauer geschlossen werden kann. Dies wird dadurch ermöglicht, dass durch das "in-situ" Verfahren zusätzliche Informationen zur Verfügung stehen, die es erlauben und die hier gezielt genutzt werden, die der Elektrolyseanlage zugeführten und die die Elektrolyseanlage verlassenden Volumenströme zu bilanzieren. Dieses Konzept ermöglicht eine zeitliche Integretation der Fluoridfreisetzungsrate und die Bestimmung eines relativen oder absoluten Degradationsmaßes der Membran. Damit ist in einer Elektrolyseanlage die Lebensdauer der Membran einfach und zuverlässig bestimmbar.

Das Verfahren ist dabei gegenüber den bisher bekannten Lösungen sehr vorteilhaft, bei denen bislang in der Regel absolute Volumenströme herangezogen werden mussten, die nicht hinreichend präzise quantifiziert werden konnten. Volumenstrommessungen gehen mit einem signifikanten finanziellen Aufwand bei Anschaffung und Unterhaltung einher. Weiterhin mussten vorhandene Ionentauscher und ggf. weitere Anlagenkomponenten der Elektrolyseanlage, die die Fluoridbeladung des wässrigen Mediums herabsetzen und das Ergebnis daher verfälschen können, mit berücksichtigt werden. Diese Nachteile werden mit dem Verfahren der Erfindung überwunden. Die Fluorfreisetzungsrate (FFR) der Membran hängt nämlich in einer Elektrolyseanlage von einigen Faktoren ab, zum Beispiel der Betriebsführung (Stromdichte, Temperatur), möglichen Verunreinigungen, die eine Umwandlung von H₂O₂ in OH-Radikale begünstigen und auch von der Lebensdauer. Es wäre mit vertretbarem Aufwand nicht möglich, für die gesamte Lebensdauer einer Elektrolyseanlage die Fluoridfreisetzungsrate lückenlos zu quantifizieren, um aus diesen Werten auf die Lebensdauer der Elektrolyseanlage zu schließen, wollte man dies mit den bekannten Verfahren durchführen.

Mit dem "in-situ" Verfahren der Erfindung wird hier Abhilfe geschaffen und der Bedarf nach einer praktikablen Lösung unter vertretbarem Aufwand geschlossen, indem eine Bilanzierung mit einer Konzentrationsmessung über die Betriebszeit verknüpft wird.

In besonders bevorzugter Ausgestaltung des Verfahrens wird die Fluoridkonzentration über eine Messung der spezifischen Leitfähigkeit und/oder des pH-Werts des Wassers in der Elektrolyseanlage ermittelt.

Die Bestimmung der Fluoridfreisetzungsrate (FFR) beruht darauf, dass das vornehmliche Abbauprodukt HF, also verdünnte Flusssäure, ist. Typischerweise ist die Konzentration sehr gering, der pH-Wert liegt über 4, oft sogar über 5. In diesem Bereich liegt HF praktisch vollständig dissoziiert vor. Da gleichzeitig das wässrige Medium als sehr verdünnt anzusehen ist, ist die Fluorid-Konzentration in sehr guter Näherung proportional zur spezifischen Leitfähigkeit, wobei die Protonen der Flusssäure den weitaus größten Teil zur Leitfähigkeit beitragen. Dies liegt am sogenannten Grotthuss-Mechanismus, wegen dem die spezifische Leitfähigkeit der Protonen außergewöhnlich hoch ist. Dieser Effekt führt dazu, dass Verunreinigungen in den Konzentrationen, wie sie typischerweise in PEM-Elektrolyse-Systemen auftreten, zu einem deutlich geringeren Anstieg der spezifischen Leitfähigkeit führen.

Demgemäß hat sich vorteilhafterweise gezeigt, dass das Verfahren gemäß der Erfindung erstaunlich robust gegenüber Verunreinigungen ist, obwohl hiermit eine relativ einfache und eher unspezifische Messmethode angewendet wird, insbesondere eine Leitfähigkeitsmessung.

Vorzugsweise wird daher die Fluorid-Konzentration im Elektrolysesystem über die spezifische Leitfähigkeit ermittelt, da aus oben genannten Gründen eine eindeutige Korrelation aufgefunden wurde und sie somit ein gutes Maß für die Konzentration von Fluorid-Ionen ist. Insofern sind robuste und günstige Leitfähigkeitssensoren einsetzbar, was von Vorteil für die Implementierung in einer Elektrolyseanlage ist. Alternativ bevorzugt können grundsätzlich ebenso pH-Sensoren eingesetzt werden. Da diese jedoch aufwändiger im Aufbau sind und häufiger gewartet werden müssen, sind Leitfähigkeitssensoren gegenüber pH-Sensoren die bevorzugte Ausgestaltung. Ein weiterer potenzieller Nachteil von pH-Sensoren gegenüber Leitfähigkeitssensoren ist, dass diese im Betrieb Kaliumchlorid (KCl) abgeben können und somit das Wasser der Elektrolyseprozesse verunreinigen. Prinzipiell kann aber im Rahmen des hier beschriebenen Verfahrens auch eine pH-Messung durchgeführt werden oder auch eine Kombination einer Leitfähigkeitsmessung und einer pH-Messung.

In besonders bevorzugter Ausgestaltung wird eine Fluoridfreisetzungsrate bestimmt, wobei eine zeitliche Änderung des Füllstands im Gas-Separator ermittelt wird, die zur Quantifizierung der Volumenströme herangezogen wird, woraus ein Maß für die zeitlich akkumulierte Degradation infolge Fluoridfreisetzung bestimmt wird.

Hierdurch kann die neben der "in-situ" Messung der Fluoridkonzentration ebenfalls hier vorgeschlagene und erforderliche Bilanzierung der Stoffströme über eine zeitliche Änderung von Füllständen in Gas-Separator besonders vorteilhaft und auf einfache Weise im Betrieb durchgeführt werden. Dabei kann auf vorhandene Komponenten und Ausstattungen einer Elektrolyseanlage zurückgegriffen werden, nämlich den Gas-Separator. Zusätzliche aufwändige Einrichtungen sind nicht erforderlich.

Vorzugsweise wird der Füllstand im Gas-Separator zwischen einem vorbestimmten maximalen Füllstand und einem vorbestimmten minimalen Füllstand zeitlich geregelt, wobei jeweilige Betriebsphasen mit einem ansteigenden Füllstand und mit einem sinkenden Füllstand eingestellt werden. Hier wird für das Verfahren die Beobachtung einer zeitlichen, d.h. dynamischen Veränderung oder Regelung des Füllstands vorgeschlagen. Der Füllstand bzw. Niveau des Wassers im Gas-Separator ist besonders einfach auswertbar und zeitliche Veränderungen können für das Messverfahren bedarfsweise gezielt herbeigeführt, registriert und der zeitliche Verlauf aufgezeichnet werden. Durch eine zeitliche Beobachtung und gezielte Beeinflussung des Füllstands ist auf eine besonders einfache Weise eine Bilanzierung möglich, um zusammen mit der Aufzeichnung der Fluoridfreisetzungsrate ein zuverlässiges Maß für die Degradation der Membran zu erhalten.

Weiter bevorzugt werden die Volumenströme von durch die Membran hindurch gefördertem Wasser, im Folgenden Transferwasser genannt, und von aus der Elektrolyseanlage verworfenen Wassers separat quantifiziert. Für eine präzise Bilanzierung des Wasserdurchsatzes in der Elektrolyseanlage werden vorteilhaft die Volumenströme herangezogen. Dabei ist die Bestimmung des Transferwassers neben einer bevorzugten Bilanzierung von Füllständen des Gas-Separators alternativ auch möglich beispielsweise über die Stromstärke der Elektrolyse. Das Transferwasser tritt bei der PEM-Elektrolyse vom Anodenraum (Sauerstoffseite) durch die Membran in der Kathodenraum (Wasserstoffseite) und ist in etwa proportional zur Stromstärke.

Vorzugsweise wird bei Überschreiten eines bestimmten Schwellwertes der spezifischen Leitfähigkeit und/oder Unterschreiten eines Schwellwertes des pH-Werts ein Teil des Wassers in dem Gas-Separator abgelassen und verworfen. Durch das gezielte Verwerfen eines bestimmbaren Volumens an Wasser wird ein Spülprozess in dem wasserführenden System der Elektrolyseanlage ermöglicht, insbesondere im Gas-Separator, der zu einer Reinigung des Wasserssystems führt, indem fluoridbeladenes Wasser mit entsprechend hoher spezifischer Leitfähigkeit kontrolliert abgelassen wird. Diese Phase wird vorteilhaft zugleich als Messphase für die Bilanzierung verwendet.

Dabei wird vorzugsweise bei Erreichen des minimalen Füllstands das Ablassen von Wasser unterbrochen, wobei in der Zeit der Unterbrechung vollentsalztes Wasser zugeführt wird und der Gas-Separator dadurch aufgefüllt wird, bis der maximale Füllstand wieder erreicht ist.

In besonders bevorzugter Ausgestaltung des Verfahrens wird abwechselnd Ablassen von Wasser in der Betriebsphase mit sinkendem Füllstand und Wiederauffüllen von Wasser in der Betriebsphase mit ansteigendem Füllstand durchgeführt, bis eine vorbestimmte minimale spezifische Leitfähigkeit erreicht wird. So wird durch abwechselndes und kontrolliertes Ablassen von Wasser und Wiederauffüllen eine Spülprozedur iterativ durchgeführt, während die entsprechend sinkende spezifische Leitfähigkeit beobachtet und zeitlich registriert wird, bis eine konstante, minimale spezifische Leitfähigkeit erreicht ist, also eine Plateaubildung oder "Sättigung" zu beobachten ist mit geringen oder gar keinen weiteren Veränderungen der spezifischen Leitfähigkeit im Wasser und damit korreliert reduzierter bzw. geringster Fluoridkonzentration.

In weiter bevorzugter Ausgestaltung wird eine Temperaturmessung durchgeführt, mittels derer eine Korrektur des ermittelten Wertes der Fluoridkonzentration durchgeführt wird, so dass ein den ermittelten Wert verfälschender Temperatureffekt aufgrund der Messung kompensiert wird.

Bei der Berechnung der Fluoridkonzentration aus den gemessenen Werten der spezifischen Leitfähigkeit ist bedarfsweise und in aller Regel eine Korrektur bzw. Kompensation durchführbar. Dieser Korrekturterm ist temperaturabhängig, da die Ionenleitfähigkeit von Fluorid und auch von Protonen in wässriger Lösung temperaturabhängig ist, weshalb vorteilhafterweise die Temperatur ebenfalls "in-situ" gemessen wird. Durch Anwendung eines temperaturabhängigen Korrekturterms auf den Messwert der Leitfähigkeit ist in vorteilhafter Weise eine sehr genaue und zuverlässige Bestimmung der Leitfähigkeit erreicht und deren zeitlicher Verlauf akkurat nachvollziehbar und registrierbar.

Die auf eine Elektrolyseanlage gerichtete Aufgabe wird erfindungsgemäß gelöst durch eine Elektrolyseanlage umfassend einen Elektrolyseur zur Erzeugung von Wasserstoff und Sauerstoff als Produktgase, mit einer protonendurchlässigen Membran und mit einem dem Elektrolyseur nachgeschalteten Gas-Separator, umfassend eine Messeinrichtung zur Bestimmung der Fluoridkonzentration und eine Füllstandsregeleinrichtung mittels derer die Fluoridfreisetzung der Membran über die Betriebszeit bestimmbar ist, wobei der zeitliche Verlauf der Fluoridkonzentration als integrierte Fluoridfreisetzungsrate ermittelbar ist und eine zeitliche Änderung des Füllstands im Gas-Separator (3, 13) bilanzierbar ist, so dass ein Maß für die betriebsbedingte Degradation der protonendurchlässigen Membran infolge einer Freisetzung von Fluorid bestimmbar ist.

Vorzugsweise weist die Messeinrichtung einen Leifähigkeitssensor auf, der an einer Stelle mit hohem Druck beim Betrieb der Anlage angeordnet ist, insbesondere an einer geodätisch möglichst tiefen Stelle. Hierdurch ist eine Verfälschung von Messergebnissen bei einer Messung der Leitfähigkeit im Betrieb der Elektrolyseanlage vermieden, da bei geringerem Druck eine Entgasung von gelösten Bestandteilen im Wasser zu befürchten ist. Alternativ oder zusätzlich ist es auch bevorzugt die Leitfähigkeitssensoren auf der Druckseite von Pumpen anzuordnen.

Weiterhin bevorzugt weist die Messeinrichtung einen Drucksensor sowie einen Temperatursensor auf, so dass über Sättigungsrechnungen die Gasfeuchte im Produktgas ermittelbar ist.

Weiterhin bevorzugt weist die Messeinrichtung einen Durchflusssensor auf, so dass die Volumenströme ermittelbar sind.

Vorteile und vorteilhafte Ausgestaltungen des Verfahrens der Erfindung sind als Vorteile und vorteilhafte Ausgestaltungen der Elektrolyseanlage und der Messeinrichtung anzusehen und umgekehrt.

Weitere Vorteile, Merkmale und Einzelheiten der Erfindung ergeben sich aus der nachfolgenden Beschreibung von bevorzugten Ausführungsbeispielen anhand der Zeichnungen. Die vorstehend in der Beschreibung genannten Merkmale und Merkmalskombinationen sowie die nachfolgend in der Figurenbeschreibung genannten und/oder in den einzigen Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden anhand einer Zeichnung näher erläutert. Hierin zeigen schematisch und stark vereinfacht:
- FIG 1: eine Elektrolyseanlage mit einem Kreislauf auf der Sauerstoffseite;
- FIG 2: ein zeitlicher Verlauf einer Regelung des Füllstands innerhalb eines Gas-Separators;
- FIG 3: ein weiteres Beispiel für einen zeitlicher Verlauf einer Regelung des Füllstands innerhalb eines Gas-Separators;
- FIG 4: eine Elektrolyseanlage mit zwei Kreisläufen, ein Kreislauf auf der Sauerstoffseite und ein Kreislauf auf der Wasserstoffseite.

Gleiche Bezugszeichen haben in den Figuren die gleiche Bedeutung.

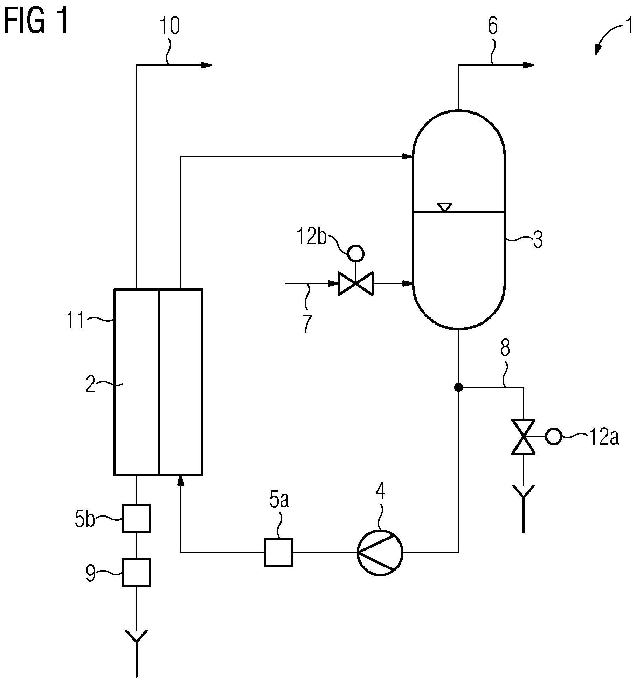

In FIG 1 ist eine Elektrolyseanlage 1 für die Elektrolyse von Wasser dargestellt. Die Elektrolyseanlage 1 weist nur einen Kreislauf auf der Sauerstoffseite auf. Dies ist ein einfaches Ausführungsbeispiel für eine Elektrolyseanlage 1, um die Erfindung auszuführen. Die Elektrolyseanlage 1 weist einen Elektrolyseur 11 und Elektrolysezellenstapel 2 mit einer Vielzahl von nicht näher dargestellten in axialer Richtung gestapelter Elektrolysezellen auf. Dabei ist eine anodische Halbzelle und die kathodische Halbzelle einer Elektrolysezelle von einer nicht näher dargestellten Membran getrennt. Das Membranmaterial weist PFSA - "Perfluorosulfonic acid" auf.

Mit diesem einfachen Kreislauf wird der Elektrolysezellstapel 2 mit Wasser für die Elektrolysereaktion versorgt, wobei das Wasser zugleich auch der Kühlung der Zellen dient. Als Produktgas der Elektrolyse wird erzeugter Sauerstoff zusammen mit überschüssigem Wasser in einem Phasengemisch in den Gas-Separator 3 für Sauerstoff geführt. In dem Gas-Separator 3 findet eine Phasentrennung statt und der gasförmige Sauerstoff wird vom flüssigen Wasser abgetrennt und über die Ableitung 6 für den Sauerstoff dem Kreislauf entzogen. Um den Wasser-Umlauf im Kreislauf aufrechtzuerhalten, ist im Kreislauf die Umwälzpumpe 4 vorgesehen. Verbrauchtes Wasser wird ausgeglichen, indem über die Zufuhrleitung 7 vollentsalztes Wasser (VE-Wasser) nachgeführt wird. Obwohl es sich um vollentsalztes Wasser handelt, könnten sich etwaige geringfügige Verunreinigungen im Kreislauf anreichern. Um diesem Effekt zu begegnen, wird ein Magnetventil 12a vorübergehend geöffnet und über die Abflussleitung 8 ein Teil des Wassers aus dem Kreislauf verworfen.

Auf der Wasserstoffseite der Elektrolyseanlage 1 befindet sich im Ausführungsbeispiel von FIG 1 kein Kreislauf. Der produzierte Wasserstoff wird lediglich über die Ableitung 10 für das Produktgas Wasserstoff abgeführt und steht der weiteren Verwendungen zur Verfügung, beispielsweise für eine Verdichtung. Üblicherweise ist in der Ableitung 10 für das Produktgas Wasserstoff ein Druckhalteventil angeordnet, das in den Ausführungsbeispielen allerdings nicht näher gezeigt ist. Dieses dient dazu, den Wasserstoff bei einem gewissen Überdruck abzuführen, was in den meisten Anwendungsfällen für die Weiterverarbeitung des Wasserstoffs sehr wünschenswert ist. Da bei der PEM-Elektrolyse auf der Wasserstoffseite in der Regel flüssiges Wasser anfällt, ist weiterhin eine Kondensatleitung 9 vorgesehen, die bei einer gewissen angefallenen Menge Wasser öffnet, um dieses Wasser abzuleiten. Dies kann beispielsweise mit einem Schwimmer realisiert sein. In FIG 1 ist angedeutet, dass dieses Wasser verworfen wird. Es ist aber auch möglich, dass dieses Wasser ebenso weiter für die Elektrolyse genutzt wird, indem es in den Kreislauf auf der Sauerstoffseite zurückgeführt wird. Diese Rückführung in den Prozess ist bei großen Elektrolyseanlagen in der Regel ein wirtschaftlich verfolgter Ansatz.

Weiterhin sind in der Elektrolyseanlage 1 ein Leitfähigkeitssensor 5a sowie ein Leitfähigkeitssensor 5b zur Messung der spezifischen Leitfähigkeit eingebracht. Diese Leitfähigkeitssensoren 5a, 5b werden herangezogen, um über eine bestimmte Korrelation auf die Fluoridkonzentrationen im Wasser zu schließen. Hierbei ist es besonders vorteilhaft, die Leitfähigkeitssensoren 5a, 5b an Stellen einzubringen, an denen der Druck im System möglichst hoch ist, da hier ein Entgasen von gelöstem Wasserstoff oder Sauerstoff besonders gering oder unwahrscheinlich ist. Gasblasen würden die präzise Messung der Leitfähigkeit stören und das Ergebnis verfälschen. Daher sind die Leitfähigkeitssensoren an einem geodätisch tiefen Punkt der Elektrolyseanlage 1 positioniert, um hydrostatische Druckvorteile auszunutzen und dadurch dem Entgasen effektiv entgegenzuwirken.

Die spezifischen Leitfähigkeiten der Stoffströme, insbesondere des Wassers, werden über die Leitfähigkeitssensoren 5a, 5b für eine Bestimmung der Fluoridfreisetzung der Membran über die Betriebszeit herangezogen. Dabei wird der zeitliche Verlauf der Fluoridkonzentration ermittelt, wobei die spezifische Leitfähigkeit als Maß für die betriebsbedingte Degradation der protonendurchlässigen Membran infolge einer Freisetzung von Fluorid ermittelt wird.

Neben den spezifischen Leitfähigkeiten der Stoffströme werden zur Bestimmung der Fluoridfreisetzungsrate Volumenströme quantifiziert und bilanziert. Im Prinzip könnte man an jedem ausgehenden Wasserstrom einen Volumendurchfluss-Sensor vorsehen, um diese Volumenströme zu erfassen. Das wäre jedoch sehr nachteilig, da es mit einem erheblichen Aufwand bei einer Elektrolyseanlage 1 verbunden ist, insbesondere hinsichtlich der Kosten für die Durchflusssensoren und den Kalibrieraufwand bei relativ hoher Fehleranfälligkeit bzw. Ungenauigkeit.

Die Erfindung verfolgt hier einen anderen Ansatz und schlägt ein sehr vorteilhaftes Verfahren vor, indem eine zeitliche Änderung von Füllständen innerhalb von Gas-Separatoren für die Quantifizierung der Volumenströme herangezogen wird.

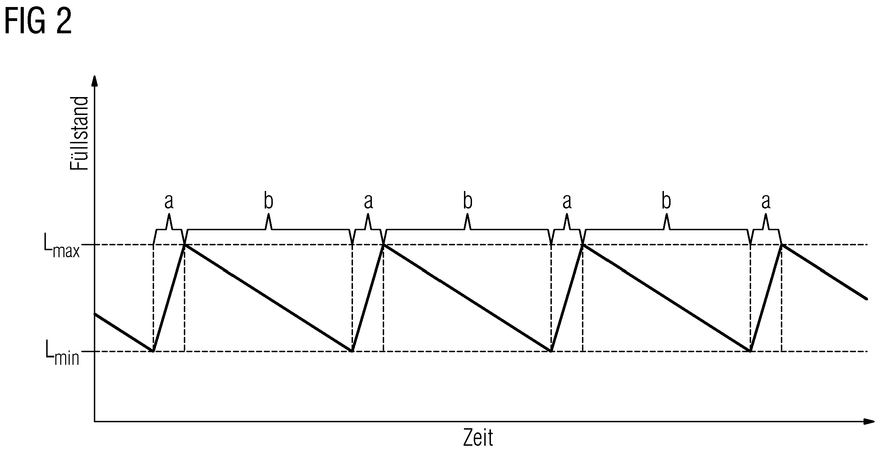

Beispielhaft wird dies anhand von FIG 2 ausgeführt, die in schematischer Darstellung den zeitlichen Verlauf des Füllstandes innerhalb des Gas-Separators 3 zeigt.

Mit Hilfe einer Füllstandsregelung wird innerhalb des Gas-Separators 3 dafür gesorgt, dass bei einem Unterschreiten des Schwellenwerts oder unteren Levels Lₘᵢₙ vollentsalztes Wasser über die Zufuhrleitung 7 nachgefüllt wird. Dies erfolgt durch das Öffnen des Magnetventils 12b und/oder dem Starten einer nicht näher gezeigten Förderpumpe. Ein entsprechendes Ansteigen des Füllstandes im Gas-Separator 3 wird durchgeführt während den im zeitlichen Verlauf ansteigenden Phasen a. Ist ein definierter maximaler Füllstand Lₘₐₓ erreicht, wird das Nachfüllen beendet. Der Füllstand sinkt in den im zeitlichen Verlauf sinkenden Phasen b in erster Linie deshalb, da einerseits Wasser bei der Elektrolysereaktion durch Aufspaltung in die Produktgase Wasserstoff und Sauerstoff verbraucht und andererseits Wasser auch durch die Membran transportiert wird, das so genannte Transferwasser, das von der anodischen Halbzelle zur der kathodischen Halbzelle durch die Membran transferiert wird.

Bei dem Verfahren handelt es sich vorteilhafterweise um ein in-situ Verfahren, das während des regulären Betriebs der Elektrolyseanlage 1 durchgeführt wird. Hierbei wird der Füllstand im Gas-Separator 3 zwischen dem vorbestimmten maximalen Füllstand Lₘₐₓ und dem vorbestimmten minimalen Füllstand Lₘᵢₙ zeitlich geregelt, wobei jeweilige Betriebsphasen mit einem ansteigenden Füllstand a und mit einem sinkendem Füllstand b eingestellt werden. Es können mehrere Zyklen mit Betriebsphase mit ansteigendem Füllstand a und sinkendem Füllstand b abwechselnd hintereinander ausgeführt werden, wobei im Allgemeinen, aber nicht notwendigerweise, lineare Transienten des zeitlichen Verlaufs des Füllstands durchfahren werden.

Um einer Akkumulation von Verunreinigungen im Kreislauf entgegenzuwirken, wird ein gewisser Anteil des Wassers aus dem Kreislauf verworfen. Dieses Verwerfen erfolgt vorzugsweise durch einen kontinuierlichen Volumenstrom durch die Abflussleitung 8. Das in FIG 2 gezeigte Absinken des Füllstands in den Phasen b würde dann nicht nur durch das Transferwasser und der Elektrolysereaktion, sondern zusätzlich durch das verworfene Wasser hervorgerufen werden. Dies wäre für eine präzise Messung und Bilanzierung der Volumenströme in-situ von gewissem Nachteil, da sich in diesem Fall nicht die Volumenströme durch Abflussleitung 8 und durch die Membran separat bestimmen ließen.

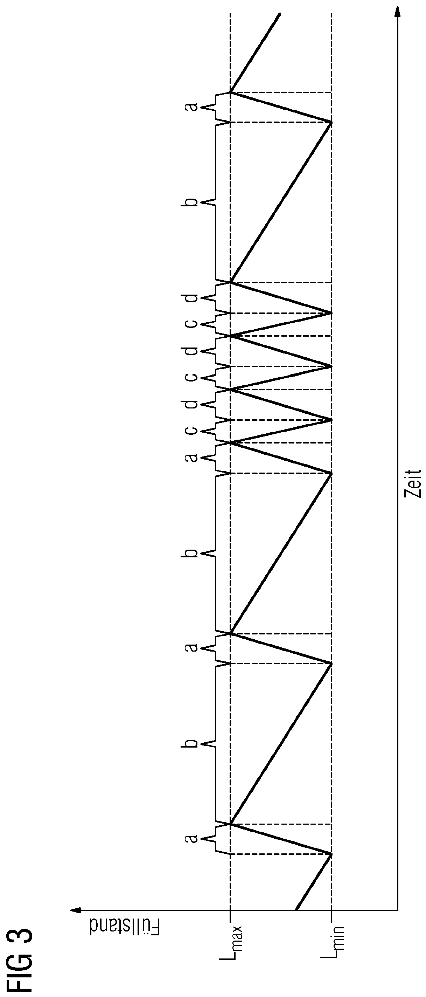

In FIG 3 ist ein weiteres Beispiel eines zeitlichen Verlaufs einer Regelung des Füllstands im Gas-Separator 3 gezeigt, mit gegenüber FIG 2 verbessertem Verfahren und Messkonzept hinsichtlich einer in-situ Bestimmung unter genauer Berücksichtigung der Volumenströme von verworfenem Wasser durch die Abflussleitung 8 und dem Transferwasser durch die Membran der Elektrolyseanlage 1.

Dabei ist lediglich beispielhaft in FIG 3 das gegenüber FIG 2 verbesserte Regelkonzept und die genaue Bilanzierung für den Füllstand innerhalb des Gas-Separators 3 mit Bezug zu FIG 1 erläutert, mit dem sich die Volumenströme des Transferwassers und dem verworfenen Wasser durch die Abflussleitung 9 separat quantifizieren lassen.

Das zugrundeliegende Merkmal für die in FIG 3 dargestellte Füllstandsregelung im Gas-Separator 3 ist, dass in den Phasen a und b kein Wasser über die Abflussleitung 9 aus dem Kreislauf geführt und aus dem Gas-Separator 3 abgelassen wird. Mithin schließt das Magnetventil 12a die Abflussleitung 9. Der besondere Vorteil dieser Verfahrensführung ist, dass der in der Phase b sinkende Füllstand im Gas-Separator 3 sich nunmehr auf folgende drei Beiträge zurückführen lässt: Dies ist zuerst das bei der Elektrolysereaktion durch elektrochemische Aufspaltung verbrauchte Wasser. Weiterhin die mit den Produktgasen aus dem Prozess herausgeführte Feuchte. Schließlich das während der Elektrolyse durch die Membran getretene Transferwasser.

Da die ersten beiden Anteile präzise berechnet werden können, lässt sich somit auch exakt bilanzieren, wieviel Wasser in einer bestimmten Zeit durch die Membran getreten ist. Einer Akkumulation von Verunreinigungen im Kreislauf wird durch ein zeitweises Verwerfen von Wasser über Abfuhrleitung 8 entgegengewirkt, was in FIG 3 während der Phasen c erfolgt.

Das Verfahren wird so ausgeführt, dass das Verwerfen von Wasser über die Abfuhrleitung 8 mit dem Überschreiten eines bestimmten Schwellenwerts der spezifischen Leitfähigkeit gestartet wird und bei Erreichen eines minimalen Füllstands Lₘᵢₙ kurzzeitig unterbrochen wird, wobei in dieser Zeit Wasser über Zufuhrleitung 7 nachgefüllt wird, was in FIG 3 den Phasen d entspricht. Wird so schließlich durch das abwechselnde Spülen bzw. Ablassen und Wiederauffüllen in den Phasen c und d eine definierte minimale spezifische Leitfähigkeit erreicht, wird das Verwerfen gestoppt, und der Elektrolysebetrieb wird ohne ein Verwerfen von Wasser weitergeführt.

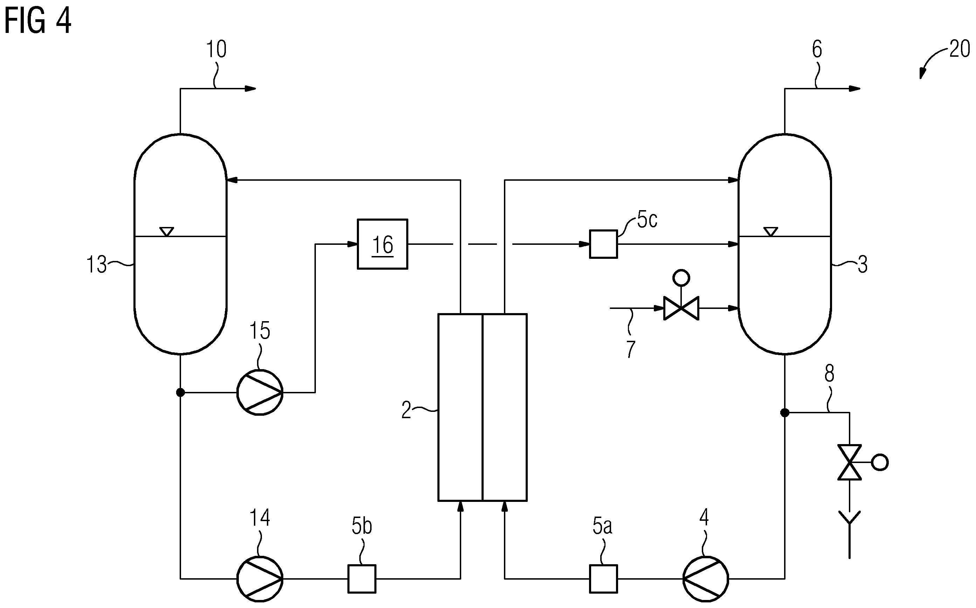

Von großem Vorteil erweist sich, dass das in FIG 3 erläuterte Verfahren auch auf komplexere Anlagen zur Wasserelektrolyse relativ einfach übertragbar und anwendbar ist. Das Verfahren ist also weitgehend unabhängig vom spezifischen Ablagentyp und daher flexibel anpassbar. FIG 4 zeigt beispielsweise eine Elektrolyseanlage 20 mit zwei Kreisläufen und einer Wasserrückführung mit einer Wasseraufbereitungseinheit 16. Die in FIG 4 gezeigte Elektrolyseanlage 20 hat zwei Kreisläufe, diesmal sowohl auf der Sauerstoffseite als auch auf der Wasserstoffseite. Der Gas-Separator 3 auf der Sauerstoffseite ist im Wesentlichen so aufgebaut wie der Gas-Separator 3 in FIG 1, er wird im Betrieb auch nach der FIG 3 ausgeführten Regelprinzip betrieben. Dieses komplexere Beispiel soll verdeutlichen, dass die Erfindung auch auf Elektrolyseanlagen 20 mit zwei Kreisläufen anwendbar und einfach übertragbar ist.

Ebenfalls ist es möglich, dass Wasseraufbereiter 16, insbesondere Ionentauscher, in der Elektrolyseanlage 20 eingesetzt werden. Dabei ist es bevorzugt, dass die spezifischen Leitfähigkeiten vor und nach dem Wasseraufbereiter 16 ermittelt werden. In FIG 4 ist direkt vor dem Wasseraufbereiter 16 allerdings kein zusätzlicher Leitfähigkeitssensor vorgesehen. Bei dem Anlagenkonzept der Elektrolyseanlage 20 mit zwei Kreisläufen kann angenommen werden, dass die spezifische Leitfähigkeit im Kreislauf wegen einer verhältnismäßig großen Umpumprate über die Umwälzpumen 4, 14 sowie die Transferpumpe 15 nahezu der spezifischen Leitfähigkeit am Eingang des Wasseraufbereiters 16 entspricht. Somit kann der Messpunkt hinter dem Wasseraufbereiter 16 entfallen, ohne Nachteile an der Qualität der Messung befürchen zu müssen.

Die vorliegende Erfindung basiert neben der Bilanzierung von Volumenströmen durch Füllstandmessungen auf Messungen der spezifischen Leitfähigkeit mit Leifähigkeitssensoren 5a, b, 5c, um in-situ auf die vorliegenden Fluoridkonzentrationen zu schließen und den Degradationsgrad der Membran zu ermitteln. Grundsätzlich sind ebenfalls pH-Sensoren geeignet, wobei diese vergleichsweise teuer und mit einem höheren Kalibrieraufwand verbunden sind. Daher sind die gezeigten Elektrolyseanlagen mit Leitfähigkeitssensoren 5a, 5b, 5c ausgestattete besonders vorteilhaft. Diese lassen sich vorteilhafterweise besonders einfach an Stellen mit höheren Drücken oder Temperaturen platzieren. Es ist dabei besonders vorteilhaft die Leitfähigkeitssensoren 5a, 5b, 5c innerhalb der Kreisläufe zu platzieren. Die Alternative diese an Auslässen, wie zum Beispiel Abfuhrleitung 8, vorzusehen, würde bei dem oben beschriebenen diskontinuierlichen Betrieb dazu führen, dass man nicht zu jeder Zeit in-situ die spezifische Leitfähigkeit im Kreislauf messen könnte und dass eine zusätzliche Messungenauigkeit wegen einer weniger konstanten Temperatur zu befürchten wäre. Weiterhin ist es besonders vorteilhaft die Leitfähigkeitssensoren 5a, 5b, 5c an denjenigen Stellen der Elektrolyseanlage 1, 20 zu platzieren, an denen ein verhältnismäßig hoher Druck herrscht, da an diesen Stellen die Tendenz zum Entgasen geringer ist. Gasbläschen würden die Messung empfindlich stören. Diese Stellen sind, wie in FIG 1 und FIG 4 bereits exemplarisch ausgeführt, auf den Druckseiten der Pumpen 4, 14 oder auf der Druckseite eines Kondensatableiters, oder allgemein auf einem relativ tiefen gedätisches Niveau aufgrund des hydrostatischen Drucks platziert.

Die vorliegende Erfindung ermöglicht es ohne zusätzlichen Aufwand eine Fluoridfreisetzungsrate in hoher zeitlicher Auflösung zu bestimmen. Erst damit ist es möglich lückenlos über die gesamte Lebensdauer einer Elektrolyseanlage 1, 20 die Menge an freigesetztem Fluorid zu bestimmen und so überhaupt erst auf eine erreichte Lebensdauer der PFSA enthaltenden Membranen wegen abgebautem Fluorid aufgrund der Degradation zuverlässig zu schließen und Restlebensdauern und verfügbare Betriebszeiten gut vorherzusagen. Somit können beispielsweise Servicemaßnahmen zeitlich sehr gut geplant werden und zukünftige Bedarfe an Ersatzzellen vorhergesehen werden, was einem wirtschaftlich langfristigen Betrieb einer Elektrolyseanlage förderlich ist. Dabei wird nach heutigem Stand ein Abbau von etwa 10% des urspünglich in der Membran eingebauten Fluorids als technisch-wirtschaftiches Lebensende festgelegt. Es ist daher wichtig, die Fluoridfreisetzungsrate zu kennen und deren Intergral über die Betriebszeit der Anlage.

## Patentansprüche

1. Verfahren zum Betrieb einer Elektrolyseanlage (1, 20) umfassend einen Elektrolyseur (11) zur Erzeugung von Wasserstoff (H₂) und Sauerstoff (O₂) als Produktgase, wobei Wasser als Edukt zugeführt wird und an einer protonendurchlässigen Membran zu Wasserstoff (H₂) und Sauerstoff (O₂) gespalten wird, wobei ein Produktgasstrom in einem Phasengemisch umfassend Wasser (H₂O) sowie ein jeweiliges Produktgas gebildet wird, und wobei ein Produktgasstrom einem dem Elektrolyseur (11) nachgeschalteten Gas-Separator (3, 13) zugeführt wird, **dadurch gekennzeichnet, dass** die Fluoridfreisetzung der Membran über die Betriebszeit bestimmt wird, wobei der zeitliche Verlauf der Fluoridkonzentration als integrierte Fluoridfreisetzungsrate ermittelt wird und eine zeitliche Änderung des Füllstands im Gas-Separator (3, 13) bilanziert wird, wobei ein Maß für die betriebsbedingte Degradation der protonendurchlässigen Membran infolge einer Freisetzung von Fluorid ermittelt wird.

2. Verfahren nach Anspruch 1, bei dem die Fluoridkonzentration über eine Messung der spezifischen Leitfähigkeit und/oder des pH-Werts des Wassers in der Elektrolyseanlage ermittelt wird.

3. Verfahren nach einem der Ansprüche 1 oder 2, bei dem eine Fluoridfreisetzungsrate bestimmt wird, wobei eine zeitliche Änderung des Füllstands im Gas-Separator (3, 13) ermittelt wird, die zur Quantifizierung der Volumenströme herangezogen wird, woraus ein Maß für die zeitlich akkumulierte Degradation infolge Fluoridfreisetzung bestimmt wird.

4. Verfahren nach Anspruch 3, bei dem der Füllstand im Gas-Separator (3, 13) zwischen einem vorbestimmten maximalen Füllstand (Lₘₐₓ) und einem vorbestimmter minimalen Füllstand (Lₘᵢₙ) zeitlich geregelt wird, wobei jeweilige Betriebsphasen mit einem ansteigenden Füllstand (a, c) und mit einem sinkenden Füllstand (b, d) eingestellt werden.

5. Verfahren nach einem der vorhergehenden Ansprüche, bei dem die Volumenströme des durch die Membran hindurch geförderten Transferwassers und von aus der Elektrolyseanlage (1, 20) verworfenen Wassers separat quantifiziert werden.

6. Verfahren nach einem der vorhergehenden Ansprüche, bei dem bei Überschreiten eines bestimmten Schwellwertes der spezifischen Leitfähigkeit und/oder Unterschreiten eines bestimmten Schwellwerts des pH-Werts ein Teil des Wassers in dem Gas-Separator (3, 13) abgelassen und verworfen wird.

7. Verfahren nach Anspruch 6, bei dem bei Erreichen des minimalen Füllstands (Lₘᵢₙ) das Ablassen von Wasser unterbrochen wird, wobei in der Zeit der Unterbrechung vollentsalztes Wasser zugeführt und der Gas-Separator wieder aufgefüllt wird, bis der maximale Füllstand (Lₘₐₓ) wieder erreicht ist.

8. Verfahren nach Anspruch 6, wobei abwechselnd Ablassen von Wasser in der Betriebsphase mit sinkendem Füllstand (b, d) und Wiederauffüllen von Wasser in der Betriebsphase mit ansteigendem Füllstand (a, c) durchgeführt wird, bis eine vorbestimmte minimale spezifische Leitfähigkeit erreicht wird.

9. Verfahren nach einem der vorhergehenden Ansprüche, bei dem eine Temperaturmessung durchgeführt wird mittels derer eine Korrektur des ermittelten Wertes der Fluoridkonzentration durchgeführt wird, so dass ein den ermittelten Wert verfälschender Temperatureffekt aufgrund der Messung kompensiert wird.

10. Elektrolyseanlage (1, 20) umfassend einen Elektrolyseur (11) zur Erzeugung von Wasserstoff (H₂) und Sauerstoff (O₂) als Produktgase, mit einer protonendurchlässigen Membran und mit einem dem Elektrolyseur (11) nachgeschalteten Gas-Separator (3, 13), umfassend eine Messeinrichtung zur Bestimmung der Fluoridkonzentration und eine Füllstandsregeleinrichtung mittels derer die Fluoridfreisetzung der Membran über die Betriebszeit bestimmbar ist, wobei der zeitliche Verlauf der Fluoridkonzentration als integrierte Fluoridfreisetzungsrate ermittelbar ist und eine zeitliche Änderung des Füllstands im Gas-Separator (3, 13) bilanzierbar ist, so dass ein Maß für die betriebsbedingte Degradation der protonendurchlässigen Membran infolge einer Freisetzung von Fluorid bestimmbar ist.

11. Elektrolyseanlage (1, 20) nach Anspruch 10, bei der die Messeinrichtung einen Leitfähigkeitssensor (5a, 5b, 5c) aufweist, der an einer Stelle mit hohem Druck beim Betrieb der Anlage angeordnet ist, insbesondere an einer geodätisch möglichst tiefen Stelle und/oder auf der Druckseite von Pumpen.

12. Elektrolyseanlage (1, 20) nach Anspruch 10 oder 11, bei der die Messeinrichtung einen Drucksensor und einen Temperatursensor aufweist, so dass über Sättigungsrechnungen die Gasfeuchte im Produktgas ermittelbar ist.

13. Elektrolyseanlage (1, 20) nach einem der Ansprüche 10 bis 12, bei der die Messeinrichtung einen Durchflusssensor aufweist, so dass die Volumenströme ermittelbar sind.

## Claims

1. A method for operating an electrolysis plant (1, 20) comprising an electrolyser (11) for generating hydrogen (H₂) and oxygen (O₂) as product gases, wherein water is supplied as a starting material and is cleaved into hydrogen (H₂) and oxygen (O₂) at a proton-permeable membrane, wherein a product gas flow is formed in a phase mixture comprising water (H₂O) as well as a respective product gas, and wherein a product gas flow is supplied to a gas separator (3, 13) downstream of the electrolyser (11), **characterised in that** fluoride release of the membrane over the operating time is determined, wherein the course over time of the fluoride concentration is established as an integrated fluoride release rate, and a change over time in the fill level in the gas separator (3, 13) is balanced, wherein a measure for operation-related degradation of the proton-permeable membrane as a result of release of fluoride is established.

2. The method of claim 1, in which the fluoride concentration is established via measuring specific conductivity and/or pH of the water in the electrolysis plant.

3. The method of any one of claims 1 or 2, in which a fluoride release rate is determined, wherein a change over time in the fill level in the gas separator (3, 13) is established, which is utilised for quantifying the volumetric flows, from which a measure for the degradation accumulated over time as a result of fluoride release is determined.

4. The method of claim 3, in which the fill level in the gas separator (3, 13) is controlled over time between a predetermined maximum fill level (Lₘₐₓ) and a predetermined minimum fill level (Lₘᵢₙ), wherein respective operating phases with an increasing fill level (a, c) and with a decreasing fill level (b, d) are adjusted.

5. The method of any one of the preceding claims, in which the volumetric flows of the transfer water conveyed through the membrane and of water discarded from the electrolysis plant (1, 20) are quantified separately.

6. The method of any one of the preceding claims, in which, upon exceeding a certain threshold of specific conductivity and/or undershooting a certain threshold of pH, a portion of the water in the gas separator (3, 13) is discharged and discarded.

7. The method of claim 6, in which, upon reaching the minimum fill level (Lₘᵢₙ), the discharging of water is interrupted, wherein during the time of the interruption, deionised water is supplied and the gas separator is refilled until the maximum fill level (Lₘₐₓ) is reached again.

8. The method of claim 6, wherein discharging of water in the operating phase with a decreasing fill level (b, d) and refilling of water in the operating phase with an increasing fill level (a, c) are performed alternately until a predetermined minimum specific conductivity is reached.

9. The method of any one of the preceding claims, in which temperature measurement is performed, by means of which correction of the established value of the fluoride concentration is performed, so that a temperature effect due to the measurement distorting the established value is compensated.

10. An electrolysis plant (1, 20) comprising an electrolyser (11) for generating hydrogen (H₂) and oxygen (O₂) as product gases, with a proton-permeable membrane and with a gas separator (3, 13) downstream of the electrolyser (11), comprising a measuring device for determining the fluoride concentration and a fill level control device by means of which fluoride release of the membrane over the operating time is determinable, wherein the course over time of the fluoride concentration is establishable as an integrated fluoride release rate, and a change over time in the fill level in the gas separator (3, 13) is balanceable, so that a measure for operation-related degradation of the proton-permeable membrane as a result of release of fluoride is determinable.

11. The electrolysis plant (1, 20) of claim 10, in which the measuring device has a conductivity sensor (5a, 5b, 5c) arranged at a location with high pressure during operation of the plant, in particular at a location which is geodetically as low as possible and/or on the pressure side of pumps.

12. The electrolysis plant (1, 20) of claim 10 or 11, in which the measuring device has a pressure sensor and a temperature sensor so that gas moisture in the product gas is establishable via saturation calculations.

13. The electrolysis plant (1, 20) of any one of claims 10 to 12, in which the measuring device has a flow sensor so that the volumetric flows are establishable.

## Revendications

1. Procédé de fonctionnement d'une installation d'électrolyse (1, 20) comprenant un électrolyseur (11) pour produire de l'hydrogène (H₂) et de l'oxygène (O₂) comme gaz produits, dans lequel l'eau est fournie comme réactif et est divisée sur une membrane perméable aux protons en hydrogène (H₂) et oxygène (O₂), dans lequel un flux de gaz produit est formé dans un mélange de phases comprenant l'eau (H₂O) et un gaz produit respectif, et dans lequel un flux de gaz produit est fourni à un séparateur de gaz (3, 13) connecté en aval de l'électrolyseur (11), **caractérisé en ce que** la libération de fluorure de la membrane est déterminée sur le temps de fonctionnement, dans lequel le profil temporel de la concentration de fluorure est déterminé comme un taux de libération de fluorure intégré et une variation temporelle du niveau de remplissage dans le séparateur de gaz (3, 13) est équilibrée, dans lequel une mesure de la dégradation opérationnelle de la membrane perméable aux protons suite à une libération de fluorure est déterminée.

2. Procédé selon la revendication 1, dans lequel la concentration en fluorure est déterminée en mesurant la conductivité spécifique et/ou la valeur du pH de l'eau dans l'installation d'électrolyse.

3. Procédé selon l'une quelconque des revendications 1 ou 2, dans lequel un taux de libération de fluorure est déterminé, une variation temporelle du niveau de remplissage dans le séparateur de gaz (3, 13) étant déterminée, laquelle variation est utilisée pour quantifier les débits volumiques, à partir desquels une mesure de la dégradation accumulée dans le temps due à la libération de fluorure est déterminée.

4. Procédé selon la revendication 3, dans lequel le niveau de remplissage dans le séparateur de gaz (3, 13) est régulé dans le temps entre un niveau de remplissage maximal prédéterminé (Lₘₐₓ) et un niveau de remplissage minimal prédéterminé (Lₘᵢₙ), des phases de fonctionnement respectives étant définies avec un niveau de remplissage croissant (a, c) et avec un niveau de remplissage décroissant (b, d).

5. Procédé selon l'une quelconque des revendications précédentes, dans lequel les débits volumiques de l'eau de transfert acheminée à travers la membrane et de l'eau rejetée de l'installation d'électrolyse (1, 20) sont quantifiés séparément.

6. Procédé selon l'une quelconque des revendications précédentes, dans lequel, lorsqu'une certaine valeur seuil de la conductivité spécifique est dépassée et/ou qu'une certaine valeur seuil du pH est inférieure, une partie de l'eau dans le séparateur de gaz (3, 13) est évacuée et rejetée.

7. Procédé selon la revendication 6, dans lequel l'évacuation de l'eau est interrompue lorsque le niveau de remplissage minimal (Lₘᵢₙ) est atteint, de l'eau déminéralisée étant fournie pendant l'interruption et le séparateur de gaz étant rempli jusqu'à ce que le niveau de remplissage maximal (Lₘₐₓ) soit à nouveau atteint.

8. Procédé selon la revendication 6, dans lequel une vidange d'eau dans la phase de fonctionnement avec un niveau de remplissage décroissant (b, d) et un remplissage d'eau dans la phase de fonctionnement avec un niveau de remplissage croissant (a, c) sont effectués alternativement jusqu'à ce qu'une conductivité spécifique minimale prédéterminée soit atteinte.

9. Procédé selon l'une quelconque des revendications précédentes, dans lequel une mesure de température est effectuée au moyen de laquelle une correction de la valeur déterminée de la concentration en fluorure est effectuée, de sorte qu'un effet de température qui fausse la valeur déterminée est compensé sur la base de la mesure.

10. Installation d'électrolyse (1, 20) comprenant un électrolyseur (11) pour produire de l'hydrogène (H₂) et de l'oxygène (O₂) comme gaz produits, avec une membrane perméable aux protons et avec un séparateur de gaz (3, 13) monté en aval de l'électrolyseur (11), comprenant un dispositif de mesure pour déterminer la concentration de fluorure et un dispositif de contrôle du niveau de remplissage au moyen duquel la libération de fluorure de la membrane peut être déterminée pendant le temps de fonctionnement, l'évolution temporelle de la concentration de fluorure pouvant être déterminée sous forme de taux de libération de fluorure intégré et une variation temporelle du niveau de remplissage dans le séparateur de gaz (3, 13) pouvant être équilibrée, de sorte qu'une mesure de la dégradation opérationnelle de la membrane perméable aux protons suite à une libération de fluorure peut être déterminée.

11. Installation d'électrolyse (1, 20) selon la revendication 10, dans laquelle le dispositif de mesure comprend un capteur de conductivité (5a, 5b, 5c) qui est disposé à un point de haute pression pendant le fonctionnement de l'installation, en particulier à un point géodésiquement le plus bas possible et/ou du côté pression des pompes.

12. Installation d'électrolyse (1, 20) selon la revendication 10 ou 11, dans laquelle le dispositif de mesure comprend un capteur de pression et un capteur de température, de sorte que l'humidité du gaz dans le gaz produit peut être déterminée via des calculs de saturation.

13. Installation d'électrolyse (1, 20) selon l'une quelconque des revendications 10 à 12, dans laquelle le dispositif de mesure comporte un capteur de débit de sorte que les débits volumiques peuvent être déterminés.
